# EUROPEAN PATENT SPECIFICATION

(11) **EP 3 282 461 B1**
(45) Date of publication and mention of the grant of the patent: **06.05.2020**
(21) Application number: 16306053.6
(22) Date of filing: 12.08.2016
(51) Int. Cl.: H01G 11/02, H01G 11/28, H01G 11/30, H01G 11/48, H01G 11/70

(54) **ELECTRODE COATED WITH REDOX POLYMERS CONTAINING DIONE UNITS, PREPARATION METHOD AND USES THEREOF**
ELEKTRODE MIT BESCHICHTUNG AUS REDOXPOLYMEREN MIT DIONEINHEITEN, HERSTELLUNGSVERFAHREN UND VERWENDUNGEN DAVON
ÉLECTRODE REVÊTUE AVEC UN POLYMÈRES RÉDOX CONTENANT DES UNITÉS DIONES, LEUR PROCÉDÉ DE PRÉPARATION ET LEURS UTILISATIONS

(43) Date of publication of application: 14.02.2018
(73) Proprietor: Commissariat à l'Energie Atomique et aux Energies Alternatives, 75015 Paris (FR)
(72) Inventor: Demadrille, Renaud, 38120 Saint Egreve (FR); Aradilla, David, 38250 St Nizier du Moucherotte (FR)
(74) Representative: Brevalex

(56) References cited:
- EP-A2- 2 084 774
- EP-A2- 2 360 758
- US-A1- 2011 245 071

## Description

### TECHNICAL FIELD

The present invention relates to the field of electrical engineering and, in particular, to the field of electrodes and electrode-based energy storage devices or secondary sources of current such as electrochemical capacitors and supercapacitors also known as ultracapacitors.

The present invention proposes an hybrid electrode coated with a novel redox polymer containing particular dione units such as 4,9-dihydro-S-indaceno[1,2-b:5,6b']dithiophene-4,9-dione units, several processes for preparing an electrode coated with such a redox polymer and electrode-based energy storage device containing such a coated electrode.

### STATE OF THE PRIOR ART

EP 2 360 758 (A2) discloses rechargeable electrochemical cells composed of two compartments separated by a separator, in which the cathodic compartment contains a cathodic lithium insertion material and p- type redox active compounds and the anodic compartment contains anodic lithium insertion material and n-type redox active compounds. The p- and n-type redox active compounds are polymer compounds in which a redox active molecule is attached to the polymer backbone, or are attached to SWCNT.

EP 2084 774 (A2) proposes a rechargeable electrochemical cell comprising two compartments separated by a separator permeable to lithium ions. in which the 1st compartment contains a cathodic lithium insertion material and SWCNT attached with p- type redox active compounds and/or the 2^{nd} compartment contains anodic lithium insertion material and SWCNT attached with n-type redox active compounds

US 2011/245071 (A1) proposes a nitrogen-containing carbon alloy which can be used in fuel cell or electrical storage device.

Silicon nanowires (SiNWs), as a novel 1-D nanostructured material, have aroused a great deal of attention in the field of electrochemical double layer capacitors due to their extraordinary properties in terms of high maximal power density (225 mW.cm⁻²) and long lifespan (millions of cycles) [1]. Additionally, their excellent compatibility with Si based-microelectronic industry has also awakened a special interest in a wide range of technological applications from medicine to aerospace industry.

Within this context, over the past years intensive research activities have been devoted to the development of high performance supercapacitors based on SiNWs [2]. Recently, several strategies have been addressed in this direction, which result mainly from the functionalization of SiNW surface using nanostructured carbonaceous materials (e.g. diamond or porous carbon) [3-5] or pseudocapacitive materials such as transition metal oxides (NiO, MnO₂) [6,7], metallic hydroxides (Ni(OH)₂) [8] or electroactive conducting polymers (ECPs) (PEDOT, PPy) respectively [9,10].

Precisely, the functionalization of SiNWs by using organic polymers has been also widely investigated in the field of solar cells. Thereby, new hybrid solar cell devices were designed from poly(3,4-ethylenedioxythiophene):polystyrene sulfonate (PEDOT:PSS) [11,12], poly(3-hexylthiophene) (P3HT) [13], poly(N-vinylcarbazole) (PVK) [14], poly(2-methoxy-5-(2-ethyhexyl-oxy)-p-phenylenevinylene) (MEH-PPV) [15] deposited onto SiNWs in order to improve the efficiency. This successful strategy allowed to obtain very interesting efficiency values in this domain (^{∼} 10 %).

From the material perspective, organic polymer-coated SiNWs have emerged as promising hybrid nanostructured materials to be employed as electrodes in electrochemical energy storage and conversion devices. More specifically, supercapacitor and battery devices made of ECP-coated SiNW electrodes exhibited excellent electrochemical performances in terms of specific capacitance, capacity, energy and power densities respectively [9,16]. Despite of extraordinary results reported in the literature concerning this research domain, ECPs present important drawbacks concerning their cycling stability, which is limited to thousands of cycles. Consequently, the use of these hybrid devices is hampered for commercial technological applications. In this regard, the rational design of advanced polymer structures capable to solve this stability issues, results of vital importance.

Within this context, several works dealing with novel conducting redox polymers have been recently reported in the field of energy storage devices. Thus, a new n-dopable polymer poly{[*N,N'*-bis(2-octyldodecyl)-1,4,5,8-naphthalenedicarboximide-2,6-diyl]-*alt*-5,5'-(2,2' bithiophene)} (P(NDI2OD-T2) or pyrene derivatives were employed as electrodes for battery devices with excellent electrochemical performances at very fast charge-discharge rates and long cycling **[17,18].** In this way, other redox polymer complex compounds were addressed for their use in battery [19,20], which are displayed below :

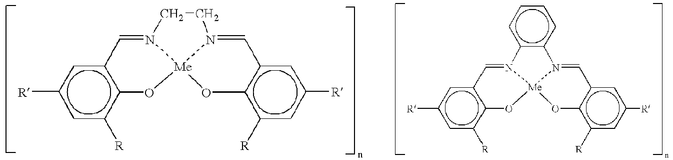

Among different redox polymer structures, quinone polymer electrodes such as poly(2,5-dihydroxy-1,4-benzoquinone-3,6-methylene) (PDBM), poly(2,5-dihydroxy-1,4-benzoquinonyl sulfide) (PDBS) and poly(anthraquinonyl sulfide) (PAQS) [21] or pyridyl complexes exhibited also enhanced cycling stability with relatively high capacitance in lithium-ion batteries [22].

Over the past years, electrodes made of advanced redox polymer structures have been also investigated for supercapacitor devices. One example corresponds to a novel phenanthridine based bithiophene modified conjugated monomer tert-butyl 3,8-di([2,2'-bithiophen]-5-yl)-6-oxophenanthridine-5(6H)-carboxylat.

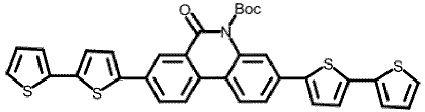

As already explained, the use of conventional pseudo-capacitive materials, as for example conducting organic polymers, has emerged as a promising strategy to enhance the capacitive properties in supercapacitors. This improvement of the electrochemical performance is due to the faradaic processes (oxidation-reduction reactions) induced by the polymer coating during the charge-discharge cycles. However, such electroactive conducting polymers (ECPs) exhibit a poor electrochemical stability, which limit their potential to be employed in commercial applications. Therefore, the development of ultra-high performance supercapacitors remains still a big challenge for our society.

From this point of view, the need of finding reliable solutions through the research and design of advanced conjugated polymers will be crucial to accomplish this goal.

As a consequence, the present inventors have sought to provide conjugated polymers useful for coating electrodes and for preparing energy storage devices with improved cycling stability in order to maintain high power and energy density values.

### DISCUSSION OF THE INVENTION

These objects and others are achieved by the invention, which proposes to implement new redox molecules containing 4,9-dihydro-s-indaceno[1,2-b:5,6-b']dithiophene-4,9-dione units and that can be polymerized not only onto SiNWs but also onto various nanostructured materials, to provide electroactive organic-inorganic materials with high robustness to be employed in the field of energy storage devices.

Even if 4,9-dihydro-s-indaceno[1,2-b:5,6-b']dithiophene-4,9-dione moiety has already been reported for the preparation of alternating copolymers via chemical polymerization reactions for application in bulk-heterojunction solar cells **[23],** these molecules and corresponding copolymers have never been used for electrochemical energy storage. Indeed in previous reports these molecules cannot be electro-polymerized and their processing is complex.

The present inventors have introduced polymerization groups on each side of 4,9-dihydro-s-indaceno[1,2-b:5,6-b']dithiophene-4,9-dione building block and demonstrated that the corresponding alternating copolymers can be prepared easily and deposited on surfaces to create modified electrodes with high robustness. These electrodes have been implemented in energy storage devices providing higher stability upon cycling compared to reference materials in the field as illustrated in the experimental part. From the results presented for bulk-heterojunction solar cells in **[23]**, it was not at all obvious for the one skilled in the art that polymers containing 4,9-dihydro-s-indaceno[1,2-b:5,6-b']dithiophene-4,9-dione units used in energy storage devices would imply an improved stability upon cycling. This class of molecules and polymers has never been investigated for electrochemical energy storage.

In addition, it should be noted that the present invention can implement polymers containing 4,9-dihydro-s-indaceno[1,2-b:5,6-b']dithiophene-4,9-dione units but also on polymers containing variant units in which at least one thiophene ring has been replaced by a selenophene ring or a furan ring.

Thus, the present invention concerns an electrode comprising :
- a support made of a conductor or semiconductor,
- at least one nanostructure made of a conductor or semiconductor, on at least one of the support surfaces,
- a layer of redox polymer deposited onto the at least one nanostructure,
wherein the redox polymer is of formula (I) : 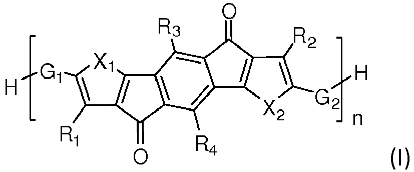 in which
n is an integer selected from the range 2 to 10,000;
X₁ and X₂, which are identical or different, each independently is selected from the group consisting of S, O and Se;
R₁, R₂, R₃ and R₄, which are identical or different, each independently is selected from the group consisting of a hydrogen, a halogen, an optionally substituted alkyl, an optionally substituted alkylaryl and an optionally substituted arylalkyl;
G₁ and G₂, which are identical or different, each independently represents a group of formula (II) : 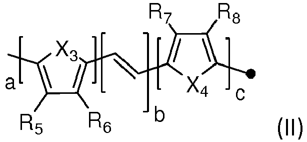 in which
   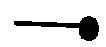 represents the covalent bond linking the G₁ or G₂ group with the dione unit in the polymer of formula (I);
   X₃ and X₄, which are identical or different, each independently is selected from the group consisting of S, O and Se;
   R₅, R₆, R₇ and R₈, which are identical or different, each independently is selected from the group consisting of a hydrogen atom, a halogen atom, an optionally substituted alkyl group, an optionally substituted arylalkyl group and an optionally substituted alkylaryl group or R₅ and R₆ and/or R₇ and R₈ form together a bridging group;
   a is selected from the group consisting of 1, 2, 3, 4, 5, 6, 7, 8, 9, 10, 11, 12, 13, 14 and 15, and
   b and c, which are identical or different, each independently is selected from the group consisting of 0, 1, 2, 3, 4, 5, 6, 7, 8, 9, 10, 11, 12, 13, 14 and 15.

In the field of energy storage devices, "redox polymers" correspond to compounds in which electron transfer occurs mainly due to redox reactions between adjacent fragments of the polymer chain. In other words, these redox polymers are intrinsically electronically conductive polymers that receive electrons by electrochemical reduction (negative doping; n-type doping) or donate electrons by oxidation (positive doping; p-type doping). The doping/dedoping is electrochemically reversible and redox polymers may be used to store and release charge in devices for storing and releasing electrical energy such as batteries and supercapacitors. Redox polymers possess high electrochemical capacitances because the doping/dedoping process involves all the mass and volume of the polymers. In the charged state, they possess high electron conductivities. The doping/dedoping process is rapid and the resistances obtained are low.

"Dione unit" is taken to mean, within the scope of the present invention, the unit of formula (I'): 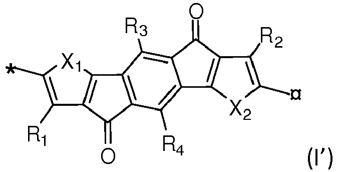 in which
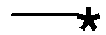 represents the covalent bond linking the dione unit with the G₁ group;
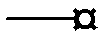 represents the covalent bond linking the dione unit with the G₂ group;
X₁, X₂, R₁, R₂, R₃ and R₄ are as previously defined.

"Alkyl group" is taken to mean, within the scope of the present invention, a linear, branched or cyclic alkyl group, comprising from 1 to 20 carbon atoms, particularly from 1 to 15 carbon atoms and in particular, from 1 to 10 carbon atoms, which can optionally comprise at least one heteroatom and/or at least one carbon-carbon double bonds or triple bonds, such as, for example, a methyl, ethyl, n-propyl, isopropyl, butyl, isobutyl, *sec*-butyl, *tert*-butyl, pentyl, isopentyl, hexyl, heptyl, octyl or nonyl group.

"Arylalkyl group" is taken to mean, within the scope of the present invention, any group derived from an alkyl group as defined above wherein a hydrogen atom is replaced by an aryl group.

"Aryl group" is taken to mean, within the scope of the present invention, any functional group or substituent derived from at least one simple aromatic ring wherein an aromatic ring corresponds to any planar cyclic compound having a delocalized π system in which each atom of the ring comprises a p-orbital, said p-orbitals overlapping themselves. An aryl group comprises one aromatic ring or several aromatic rings identical or different joined or connected by a single bond or by a hydrocarbon group, each ring having from 4 to 20 carbon atoms, particularly from 4 to 14 carbon atoms, in particular, from 4 to 8 carbon atoms and which can optionally comprise at least one heteroatom. As examples of aryl group, phenyl, biphenyl, naphthyl, anthracenyl, cyclopentadienyl, pyrenyl, tetrahydronaphthyl, furanyl, pyrrolyl, thiophenyl, oxazolyl, pyrazolyl, isoquinolinyl, thiazolyl, imidazolyl, triazolyl, pyridinyl, pyranyl, quinolinyl, pyrazinyl and pyrimidinyl groups may be cited. An aryl group can be substituted.

"Alkylaryl group" is taken to mean, within the scope of the present invention, any group derived from an aryl group as defined above wherein a hydrogen atom is replaced by an alkyl group as defined above.

"Substituted alkyl group", "substituted arylalkyl group", "substituted aryl group" or "substituted alkylaryl group" are taken to mean, within the scope of the present invention, an alkyl, arylalkyl, aryl or alkylaryl group as defined previously substituted by a group or several groups, identical or different, chosen from a halogen; an amine; a diamine; a carboxyl; a carboxylate; an aldehyde; an ester; an ether; a hydroxyl; a halogen; an aryl optionally substituted as defined previously and particularly such as a phenyl, a benzyl or a naphthyl; an alkyl optionally substituted as defined previously and particularly such as a methyl, an ethyl, a propyl or a hydroxypropyl; an amide; a sulphonyl; a sulphoxide; a sulphonic acid; a sulphonate; an acyl; a vinyl; a hydroxyl; an epoxy; a phosphonate; an isocyanate; a thiol; a glycidoxy; an acryloxy; a thiophene; a furan; a selenophene and salts thereof.

"Heteroatom" is taken to mean, within the scope of the present invention, an atom chosen from the group consisting of nitrogen, oxygen, phosphorous, sulphur, silicon, fluorine, chlorine and bromine.

"Halogen" is taken to mean, within the scope of the present invention, an atom chosen from the group consisting of fluorine, chlorine, iodine and bromine. Advantageously, when a halogen is implemented in the present invention, it is a fluorine or a chlorine.

"Bridging group" is taken to mean, within the scope of the present invention, a hydrocarbon group from 1 to 50 carbon atoms and particularly from 2 to 40 carbon atoms, optionally comprising one heteroatom or several heteroatoms identical or different and/or one or several ethylenic unsaturation(s), said group being optionally substituted. Any bridging group known by one skilled in the art can be implemented within the scope of the present invention. As illustrative examples of bridging groups, one can cite group of formula -O-(CH₂)ₘ-O- in which m is 1, 2, 3 or 4; a group of formula -O-(CH₂)ₓ-C(CH₃)₂-(CH₂)_{y}-O- in which x and y are identical or different and each independently is selected from the group consisting of 1, 2, 3 and 4, a group of formula -S-(CH₂)ₘ-S- in which m is 1, 2, 3 or 4 or group of formula -S-(CH₂)ₓ-C(CH₃)₂-(CH₂)_{y}-S- in which x and y are identical or different and each independently is selected from the group consisting of 1, 2, 3 and 4.

Advantageously, in the redox polymer of formula (I), X₁ and X₂ are identical. Thus (X₁,X₂) is selected from the group consisting of (S,S), (O,O) and (Se,Se). More particularly, X₁ and X₂ both represent S.

In the redox polymer of formula (I), advantageous dione units are those in which the groups R₁ and R₂ are identical and/or the groups R₃ and R₄ are identical and particularly those in which the groups R₁ and R₂ both represent a hydrogen atom, an optionally substituted alkyl group, an optionally substituted arylalkyl group or an optionally substituted alkylaryl group and/or the groups R₃ and R₄ both represent a hydrogen.

In particular, in advantageous dione units, the groups R₁ and R₂ are identical and both represent an optionally substituted alkyl group. In this particular embodiment, the groups R₃ and R₄ advantageously represent a hydrogen.

Advantageously, in the G₁ group and/or the G₂ group of formula (II), X₃ and X₄ are identical. Thus (X₃,X₄) is selected from the group consisting of (S,S), (O,O) and (Se,Se). More particularly, X₃ and X₄ both represent S.

As above defined, four alternatives for the G₁ (or G₂) group of formula (II) exist and are:
- R₅, R₆, R₇ and R₈, which are identical or different, each independently is selected from the group consisting of a hydrogen atom, a halogen atom, an optionally substituted alkyl group, an optionally substituted arylalkyl group and an optionally substituted alkylaryl group (first alternative);
- R₅ and R₆, which are identical or different, each independently is selected from the group consisting of a hydrogen atom, a halogen atom, an optionally substituted alkyl group, an optionally substituted arylalkyl group and an optionally substituted alkylaryl group and R₇ and R₈ form together a bridging group (second alternative);
- R₇ and R₈, which are identical or different, each independently is selected from the group consisting of a hydrogen atom, a halogen atom, an optionally substituted alkyl group, an optionally substituted arylalkyl group and an optionally substituted alkylaryl group and R₅ and R₆ form together a bridging group (third alternative) and
- R₅ and R₆ form together a bridging group and R₇ and R₈ form together a bridging group, these bridging groups can be identical or different (fourth alternative).

The first and the fourth alternatives are preferred.

Advantageously, in the G₁ group and/or the G₂ group of formula (II) according to the first alternative, R₅ and R₈ are identical and selected from the group consisting of a hydrogen atom, an optionally substituted alkyl group, an optionally substituted arylalkyl group and an optionally substituted alkylaryl group and/or R₆ and R₇ are identical and selected from the group consisting of a hydrogen atom, an optionally substituted alkyl group, an optionally substituted arylalkyl group and an optionally substituted alkylaryl group. More particularly, R₅ and R₈ are identical and represent a hydrogen atom and R₆ and R₇ are identical and selected from the group consisting of a hydrogen atom, an optionally substituted alkyl group, an optionally substituted arylalkyl group and an optionally substituted alkylaryl group. More particularly, R₅ and R₈ are identical and represent a hydrogen atom and R₆ and R₇ are identical and represent an optionally substituted alkyl group.

Advantageously, in the G₁ group and/or the G₂ group of formula (II) according to the fourth alternative, R₅ and R₆ form together a bridging group and R₇ and R₈ form together a bridging group, these bridging groups being identical.

More particularly, in the G₁ group and/or the G₂ group of formula (II), a is selected from the group consisting of 1, 2, 3, 4, 5, 6, 7, 8, 9, 10; b is selected from the group consisting of 0, 1, 2, 3, 4, 5, 6, 7, 8, 9, 10 and c is selected from the group consisting of 0, 1, 2, 3, 4 and 5.

In a particular embodiment, in the G₁ group and/or the G₂ group of formula (II), a and c are identical and selected from the group consisting of 1, 2, 3, 4, 5, 6, 7, 8, 9 and 10, and b is selected from the group consisting of 0, 1, 2, 3, 4 and 5. In a more particular embodiment, in formula (II), a and c both are equal to 1 and b is selected from the group consisting of 0, 1, 2, 3, 4 and 5 and advantageously from the group consisting of 0, 1, 2 and 3. In a still more particular embodiment, in formula (II), a, b and c are all equal to 1.

In a variant embodiment, in the G₁ group and/or the G₂ group of formula (II), a and c are different and b is selected from the group consisting of 0, 1, 2, 3, 4 and 5. Advantageously, in this variant, a is equal to 1 and c is equal to 0 and b is selected from the group consisting of 0,1, 2, 3, 4 and 5 and advantageously from the group consisting of 0, 1, 2 and 3. More advantageously, b and c are both equal to 0 and a is equal to 1. In this variant embodiment, R₆ represents a hydrogen atom and R₅ is selected from the group consisting of a hydrogen atom, an optionally substituted alkyl group, an optionally substituted arylalkyl group and an optionally substituted alkylaryl group and advantageously is an optionally substituted alkyl group.

In a particular embodiment, G₁ and G₂ are identical in the formula (I) whereby the redox polymer of formula (I) is symmetrical and thus devoid of coupling defects.

As examples of particular redox polymers usable in the present invention, one can cite:
- the redox polymer of formula (I) in which X₁ = X₂ = S ; R₁ = R₂ = an octyl radical; R₃ = R₄ = H ; G₁ = G₂ = a group of formula (II) in which b = c = 0 and a = 1 with X₃ = S, R₆ = H and R₅ = an octyl radical. This polymer corresponds to poly(FL136) as defined in the hereinafter experimental part and can be represented either by the following formula (III) or the following formula (III') : 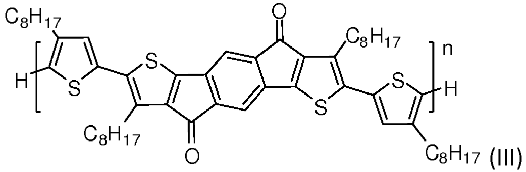 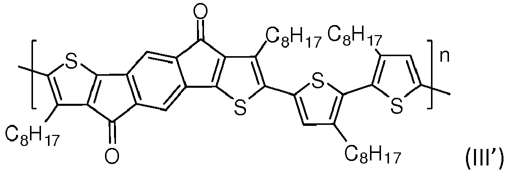
- the redox polymer of formula (I) in which X₁ = X₂ = S ; R₁ = R₂ = an octyl radical; R₃ = R₄ = H ; G₁ = G₂ = a group of formula (II) in which a = b = c = 1 with X₃ = X₄ = S, R₅ = R₈ = a hydrogen atom and R₆ = R₇ = an octyl radical. This polymer corresponds to poly(FL137) as defined in the hereinafter experimental part and can be represented either by the following formula (IV) or the following formula (IV') : 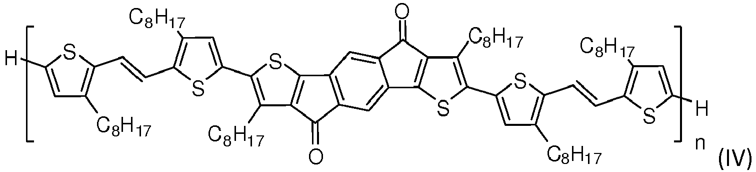 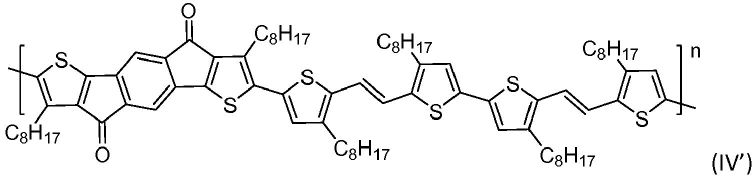
- the redox polymer of formula (I) in which X₁ = X₂ = S ; R₁ = R₂ = an octyl radical; R₃ = R₄ = H ; G₁ = G₂ = a group of formula (II) in which b = c = 0 and a = 1 with X₃ = S and R₅ and R₆ together form a bridging group of formula -O-(CH₂)₂-O-. This polymer can be represented by the following formula (V) : 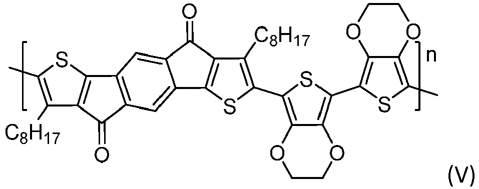
- the redox polymer of formula (I) in which X₁ = X₂ = S ; R₁ = R₂ = an octyl radical; R₃ = R₄ = H ; G₁ = G₂ = a group of formula (II) in which b = c = 0 and a = 1 with X₃ = S and R₅ and R₆ together form a bridging group of formula -O-(CH₂)-C(CH₃)₂-(CH₂)-O-. This polymer can be represented by the following formula (VI) :

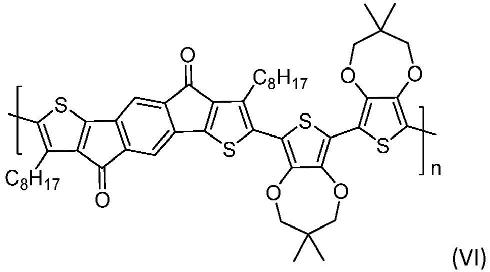

In formulas (III), (III'), (IV), (IV'), (V) and (VI), n is as previously defined.

The redox polymer implemented in the electrode according to the present invention forms a layer that covers the at least one nanostructure present on at least one of the support surfaces. In other words, said polymer coats the nanostructure and is deposited or applied thereon.

Thus, no covalent bond exists between at least one atom of the polymer and at least one atom of the nanostructure in the electrode according to the present invention. More particularly, the interactions between the polymer and the nanostructure in the electrode according to the present invention are non-covalent bonds such as bonds of electrostatic interaction type and/or bonds of hydrogen bridge type.

By "electrostatic bond" is meant an intermolecular interaction between at least two positively or negatively charged groups belonging to either the polymer, or the nanostructure. The expressions "ionic non-covalent bond", "ionic interaction", "electrostatic bond" or "electrostatic interaction" are equivalent and can be used interchangeably. In the present invention, this intermolecular interaction is attracting. It involves a negatively charged group of the polymer and a positively charged group of the nanostructure. Alternatively, it involves a positively charged group of the polymer and a negatively charged group of the nanostructure.

By "hydrogen non-covalent bond" is meant a bond in which a hydrogen atom bound covalently to an atom A is attracted by an atom B containing a pair of free electrons (:B). This leads to strong polarization of the A-H bond and to electrostatic interactions between H(δ+) and :B. The expression "hydrogen non-covalent bond" is equivalent to the expression "dipole-dipole interaction".

Advantageously, the layer of redox polymer implemented in the present invention has a thickness below the nanostructure thickness. In particular, the redox polymer layer has a thickness comprised between 1 nm and 20 µm and more particularly between 5 nm and 5 µm. More particularly, the redox polymer layer is conformal and thus closely follows the shape of the nanostructure.

The electrode according to the present invention comprises a support made of a conductor or semiconductor. Any support usually implemented for electrode in the field of energy storage devices can be used within the present invention. This support is a solid substrate which can present different shapes and sizes, according to the device in which the electrode according to the present invention is or will be used. Advantageously, this support has a shape selected from the group consisting of a plaque, a rod, a cylinder, a tube and a wire.

The support of the electrode according to the present invention is made of a semiconductive material, of conductive material or of a material presenting semiconductive areas and conductive areas.

From among the conductive materials advantageously implemented within the scope of the present invention, mention may be made of carbon, metals, noble metals, oxidized metals, transition metals, metal alloys and as particular and non-limiting examples, graphite, glass carbon, iron, copper, brass, nickel, cobalt, zinc, gold, platinum, titanium, steel, stainless steel, fluorine-doped tin oxide (FTO), indium tin oxide (ITO), aluminium-doped zinc oxide (AZO), mixtures thereof and alloys thereof.

The term "semiconductor" or the expression "semiconductive material" is understood to mean an organic or inorganic material that has an electrical conductivity intermediate between metals and insulators. The conductivity properties of a semiconductor are mainly influenced by the charge carriers (electrons or holes) that the semiconductor has. These properties are determined by two particular energy bands known as the valence band (corresponding to the electrons involved in covalent bonds) and the conduction band (corresponding to electrons in an excited state and that are capable of moving within the semiconductor). The "band gap" represents the energy difference between the valence band and the conduction band. The band gap generally does not exceed 3.5 eV for semiconductors, versus 5 eV in materials considered to be insulators. A semiconductor also corresponds, unlike insulators or metals, to a material for which the electrical conductivity can be controlled, to a large extent, by addition of dopants which correspond to foreign elements inserted into the crystal structure of the semiconductor.

From among the semiconductive materials advantageously implemented within the scope of the present invention, mention may be made, as particular and non-limiting examples, of silicon (Si), doped silicon, silicon carbide (SiC), germanium (Ge), gallium (Ga), gallium arsenide (GaAs), gallium nitride (GaN), gallium phosphide (GaP), gallium antimonide (GaSb), indium arsenide (InAs), indium phosphide (InP), indium antimonide (InSb), aluminium phosphide (AlP), aluminium antimonide (AlSb), aluminium sulfide (AlS), lead sulfide (PbS), lead selenide (PbSe), zinc sulfide (ZnS), zinc selenide (ZnSe), zinc telluride (ZnTe), cadmium sulfide (CdS), cadmium selenide (CdSe), cadmium telluride (CdTe), magnesium sulfide (MgS), magnesium selenide (MgSe), magnesium telluride (MgTe), calcium sulfide (CaS), calcium selenide (CaSe), calcium telluride (CaTe), strontium sulfide (SrS), strontium selenide (SrSe), strontium telluride (SrTe), barium sulfide (BaS), barium selenide (BaSe), barium telluride (BaTe), binary and ternary metal oxides such as zinc oxide (ZnO), titanium dioxide (TiO₂), tin oxide (SnO₂) and zinc tin oxide (Zn₂SnO₄), mixtures thereof and alloys thereof. Particular examples of such alloys are alloys of silicon and germanium in any proportions (SiGe).

In a particular embodiment, the support of the electrode is made of silicon and more advantageously doped silicon.

The electrode according to the present invention comprises at least one nanostructure made of a conductor or semiconductor, on at least one of the support surfaces. One can speak about a nanostructured support. Using a nanostructured support makes it possible to obtain an electrode with high area density and a greatly increased exchange area at the electrode/electrolyte interface.

In the sense of the present invention, by "surface" is meant the outer portion of the support which limits it in any direction. It is possible, for said support to conceptually define different surfaces. The invention applies to any type of surface regardless of its geometry. The latter may be simple, like a perfectly planar surface or complex surface, like a rough surface.

In the sense of the present invention, by "nanostructure" is meant a structure having one or more characteristic dimensions in the range of 0.1 to 100 nm. Advantageously, the nanostructure implemented in the present invention is with a large surface area: there are voids between the nanoelements forming this nanostructure. More particularly, the nanostructure implemented in the present invention in the form of nanotubes, nanowires, nanocones, nanotrees, nanoneedles, nanoparticles, nanoarrays, nanorods, nanospheres, nanosheets or mixtures thereof.

The nanostructure implemented in the present invention can be made of any conductive or semiconductive material as previously defined. Advantageously, this nanostructure is made of silicon and more advantageously doped silicon.

In a particular embodiment of the electrode according to the present invention, the support and the nanostructure are both made of silicon and more advantageously doped silicon. In this embodiment, the nanostructure is advantageously in the form of nanowires. Such nanostructures can either be obtained by chemical growth, electrochemical growth, epitaxial growth or chemical vapor deposition (CVD) or by etching the structures directly into the silicon support. More complex 3D nanostructures such as nanotrees and nanocones can also be obtained using these methods.

The present invention concerns a device for storing and releasing electrical energy comprising at least one electrode as previously defined. Such a device can be a battery, a dielectric capacitor, a supercapacitor or a hybrid system that can act simultaneously as a capacitor or a battery.

In a particular embodiment, the device for storing and releasing electrical energy according to the present invention comprises at least two electrodes as previously defined. These electrodes can be different or identical. Advantageously these electrodes are identical.

In a variant embodiment, the device for storing and releasing electrical energy according to the present invention comprises at least two electrodes, one of which is an electrode according to the present invention and the other of which is different from an electrode according to the present invention. For example, this other electrode can be made of carbon such as, for example, nanotubes, graphene or diamond, advantageously with a large specific surface area i.e. a specific surface area above 1500 m²/g. It can also be made of semiconducting polymers or inorganic semiconducting materials.

An electrochemical supercapacitor usually comprises a hermetically sealed housing filled with an electrolyte, two electrodes placed inside the housing, a separator soaked by an electrolyte, such as a membrane that separates the anode space from the cathode space and special lead terminals coupling the supercapacitor to external electric circuits. An electrochemical capacitor comprises a case, housing electrodes disposed inside the case and an electrolyte that fills the space between the electrodes.

When the device for storing and releasing electrical energy according to the present invention is an electrochemical capacitor or a supercapacitor, the latter is based on the Faradic (battery type) method for storing electrical power. In such a device, the charge/discharge process is accompanied by redox reactions in the layer of redox polymers at the surfaces of the electrodes.

The electrode according to the present invention can be employed as a positive electrode of the device for storing and releasing electrical energy according to the present invention and in particular in the electrochemical capacitor or supercapacitor. The negative electrode can be made by different methods.

In a variant, the electrode according to the present invention can be employed as a negative electrode of the device for storing and releasing electrical energy according to the present invention and in particular in the electrochemical capacitor or supercapacitor. The positive electrode can be made by different methods.

In another variant, the negative electrode and the positive electrode of the device for storing and releasing electrical energy according to the present invention and in particular in the electrochemical capacitor or supercapacitor can consist in two electrodes according to the present invention.

The other elements implemented in the electrochemical capacitor or supercapacitor such as the electrolyte, the case and the separator are well-known to the one skilled in the art. Additional information thereon can be found in the litterature and for example in [20].

The present invention also concerns a method for preparing an electrode as previously defined.

In a particular embodiment of the preparation of an electrode as previously defined, the redox polymer is prepared before being placed onto the nanostructured support of the electrode. Thus this method comprises the steps consisting in :
a) preparing a redox polymer of formula (I) as previously defined, and
b) depositing said redox polymer onto the at least one nanostructure as previously defined present on at least one surface of the support as previously defined.

Any method known by the one skilled in the art for preparing a redox polymer of formula (I) can be implemented at step (a). In this method, it can be used different or identical monomers of formula (VII) : 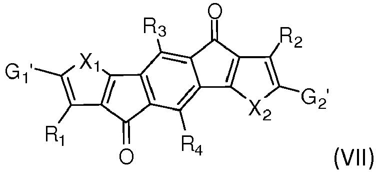 in which X₁, X₂, R₁, R₂, R₃ and R₄ are as previously defined and

G₁' and G₂', which are identical or different, each independently represents a group of formula (VIII) : 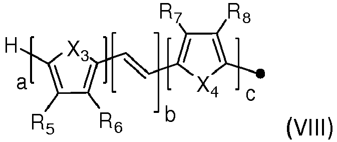 in which 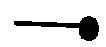 , X₃, X₄, R₅, R₆, R₇ and R₈ are as previously defined.

All alternatives and particular embodiments disclosed for the groups G₁ and G₂ apply to groups G₁' and G₂' *mutatis mutandis.*

Any monomer of formula (VII) and in particular any symmetrical monomer of formula (VII) in which X₁ and X₂ represent S and G₁' and G₂' are identical can be prepared from 3,8-dioctyl-4,9-dihydro-s-indaceno[1,2-b:5,6-b']dithiophene-4,9-dione. This compound is functionalized by two bromine groups whereby 2,7-dibromo-3,8-dioctyl-4,9-dihydro-s-indaceno[1,2-b:5,6-b']dithiophene-4,9-dione is obtained. The latter can be coupled using the Stille or Suzuki coupling conditions well-known to the one skilled in the art with at least one derivative functionalized by a boronic ester or a stannyl group according to known procedures since these functional groups are known to be effective in palladium-catalyzed couplings. The derivative will be chosen according to the monomer of formula (VII) to be prepared. Some particular procedures are disclosed in the hereinafter experimental description in order to prepare FL136 or FL137. It is obvious that this description can be applied to all redox polymers of formula (I) according to the invention with the necessary adaptations of the processes and means for implementation which can be easily carried out by the one skilled in the art in this technical field.

Various procedures for polymerizing monomers of formula (VII) can be implemented at step (a) of the method according to the present invention. As for illustrative and non-limitative examples, one can cite (i) chemical or electrochemical oxidizing coupling, for example using ferric chloride (FeCl₃), (ii) polycondensation or polyaddition of correctly functionalized derivatives of the monomers of formula (VII), for example, by incorporating bromines in the [alpha] position of the end thiophene, selenophene or furan rings and then by using the Yamamoto coupling conditions, the polymerization taking place by polyaddition in the presence of a "zero valent" nickel complex or (iii) oxidative polymerization as illustrated in the hereinafter experimental description.

Various procedures can also be used to apply the redox polymer of formula (I) obtained at step (a) on the nanostructured support. This procedure is advantageously a liquid route technique that can be selected from the group consisting of sublimation, evaporation, spin-coating, dip-coating, spray-coating, drop casting, painting coating, screen-printing and resist-deposition.

In a variant embodiment of the preparation of an electrode as previously defined, the redox polymer is prepared in presence of the nanostructured support of the electrode. This embodiment makes it possible to obtain an improved impregnation of the nanostructure by the redox polymer. This variant method comprises the steps consisting in :
a') putting into contact the support as previously defined presenting on at least one of its surface a nanostructure as previously defined with a solution comprising different or identical monomers of formula (VII) : 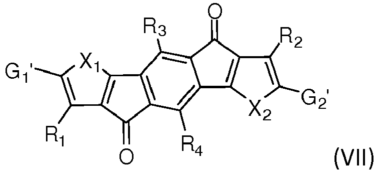 in which X₁, X₂, R₁, R₂, R₃, R₄, G₁' and G₂' are as previously defined,
b') electropolymerizing said monomers whereby redox polymer of formula (I) as previously defined is formed.

The electropolymerization implemented during step (b') of this variant embodiment is a technique well-known by the one skilled in the art. A particular electropolymerization procedure is disclosed in the hereinafter experimental description in order to prepare poly(FL137).

Other characteristics and advantages of the invention can be seen more clearly from the additional description below, given by way of illustrative and non-limiting example and with reference to the accompanying figures.

### BRIEF DESCRIPTION OF THE DRAWINGS

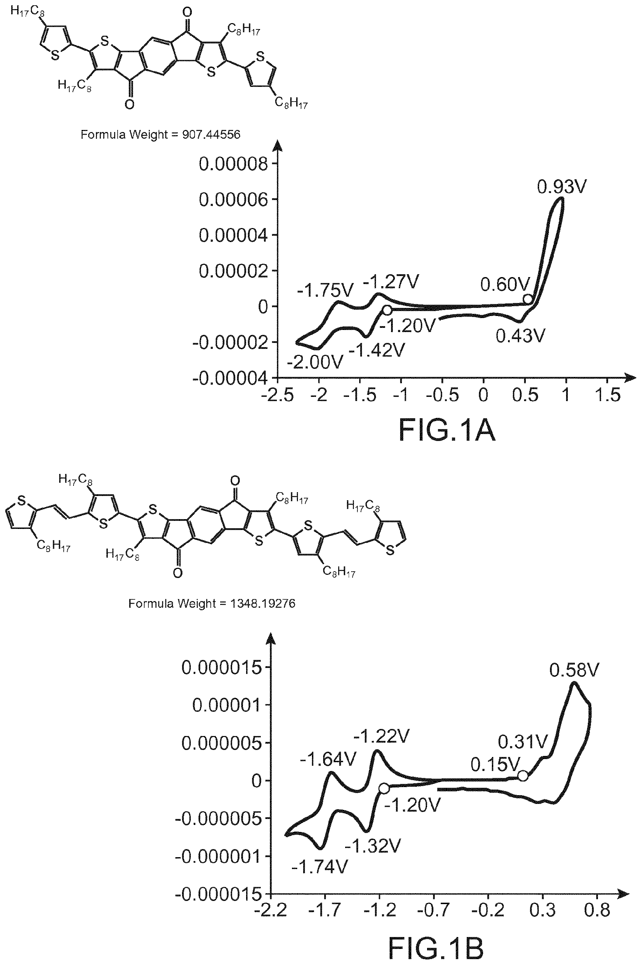

Figure 1 presents the characterization using cyclic voltammetry experiments obtained while characterizing by electrochemistry monomers implemented in the invention i.e. FL136 (Figure 1A) and FL137 (Figure 1B).

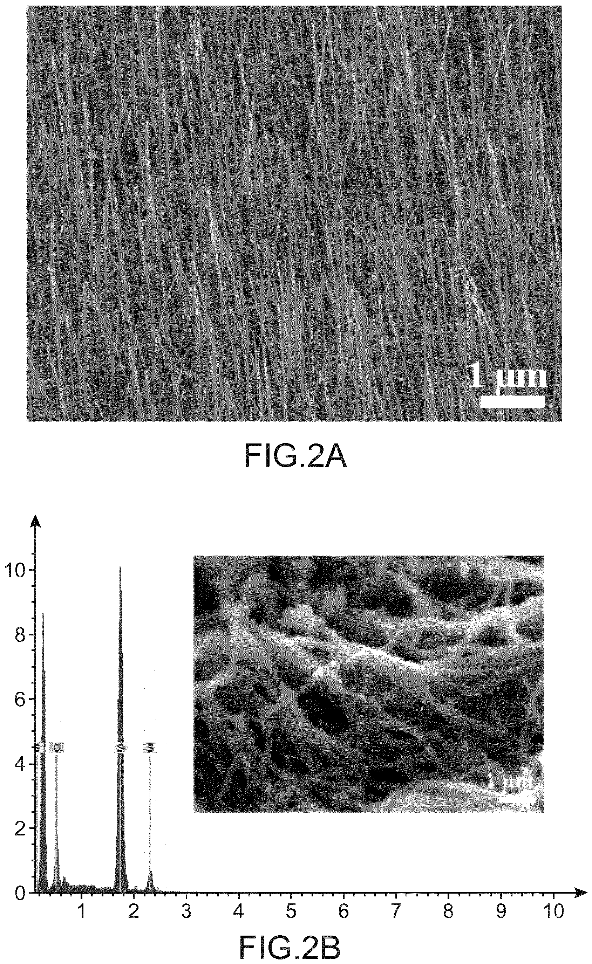

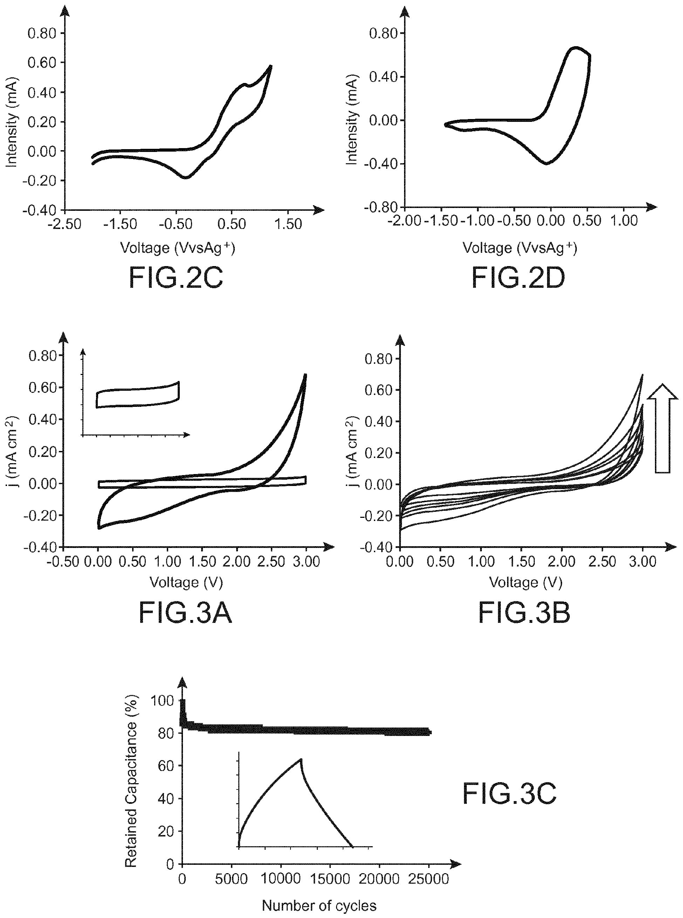

Figure 2 concerns the characterization of FL137 coated SiNWs, optionally compared with SiNWs. Figure 2A presents SEM image of SiNWs and Figure 2B presents SEM image of FL137 coated SiNWs with the corresponding EDX analysis. Figure 2C presents the cyclic voltammogram curve of 1.5 mM FL137 in CH₂Cl₂ with 0.1 M NBu₄PF₆ on highly doped silicon substrates. Initial and final potentials: -2.20 V; reversal potential: 1.40 V. Scan rate: 50 mVs⁻¹. Figure 2D presents the CV curve of a FL137-coated SiNW electrode at a scan rate of 5 mVs⁻¹ in a 3-electrochemical cell using PYR₁₃TFSI as electrolyte. Initial and final potential: -1.50 V; reversal potential: 0.50 V.
Figure 3 presents the electrochemical performance of SiNW-based symmetric supercapacitor and of a FL137-coated SiNW-based symmetric supercapacitor at a cell voltage of 3V using N₁₁₁₄ BTA as electrolyte. Figure 3A presents the CV curves of SiNWs-based supercapacitor (plain line) and hybrid supercapacitor (bold line) at a scan rate of 2Vs⁻¹. Figure 3B presents the CV curves of FL137-coated SiNW-based symmetric supercapacitor at different scan rates from 0.4 to 2Vs⁻¹. Arrow indicates the increase of scan rate. Figure 3C presents the cycling stability of the device performed using 25,000 complete galvanostatic charge-discharge cycles at a current density of 1 mA.cm⁻². Inset shows an example of the cycle.

### DETAILED DISCUSSION OF PARTICULIAR EMBODIMENTS

### I. Methods for the synthesis of monomers

### I.1. Chemicals

All reagents and chemicals were purchased from Aldrich or Acros and used as received, except for THF which was distilled over sodium-benzophenone prior to use. Thin layer chromatography was performed on silica gel-coated aluminium plates with a particle size of 2-25 µm and a pore size of 60 Å. Silica from Merck (70-230 mesh) was used for flash chromatography. 5,5-dimethyl-2-(4-octylthien-2-yl)[1,3,2]dioxaborinane and [E-(5-(3-octylthien-2-yl-vinyl)-(3-octylthien-2-yl)]-trimethyltin were prepared according to published procedures **[24].**

### I.2. Characterisation Methods

All synthesized products were identified by ¹H and ¹³C NMR spectroscopy, as well as by elemental analysis. NMR spectra were recorded in chloroform-d, or acetone-d6 containing tetramethylsilane (TMS) as internal standard, on a Bruker AC200 spectrometer.

Elemental analyses (C, H, N, and S) were carried out by the Analytical Service of the CNRS (Vernaison, France) or by CRMPO at the University of Rennes 1.

Ultraviolet-visible (UV-vis) absorption spectra were recorded on a HP 8452A spectrometer (wavelength range 190-820 nm).

### II. Synthesis of monomers FL136 and FL137

### II.1. 3-octyl-5-trimethylstannylthiophene

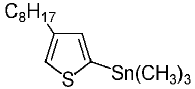

To a stirred solution of 3-octylthiophene (7.50 g, 38.19 mmol) in 100 mL of freshly distilled THF at -78°C was added dropwise a solution of n-butyllithium (n-BuLi) (2.5 M, 16.8 mL, 42 mmol). The resulting solution was stirred for 45 min and warmed to -50°C. The mixture was cooled at -78°C and trimethyltin chloride (8.40 g, 42 mmol) dissolved in 20 mL of THF was added quickly.

The resulting mixture was allowed to warm to room temperature over 80 min and then it was poured into water, extracted with diethyl ether and the organic extracts were washed with saturated aqueous solution of NH₄Cl. After drying and filtration, the filtrate was concentrated under reduced pressure to give 13.80 g of organostannane. Due to the high toxicity of organostannane compound, the crude product was merely titrated (90% of purity) by NMR and used without further purification.
¹H NMR (200 MHz, CDCl₃) δ (ppm): 7.20 (d, J=0.8 Hz, 1H), 7.01 (d, J=0.8 Hz, 1H), 2.64 (t, 3J=7.4 Hz, 2H), 1.62 (tbr, 2 H), 1.35-1.25 (m, 10 H), 0.88 (t, 3J=6.8 Hz, 3H), 0.35 (s, 9H).

### II.2. Diethyl-2,5-bis[4'-octylthien-2'-yl]-1,4-benzenedicarboxylate

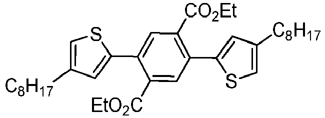

Diethyl-2,5-dibromo-1,4-benzenedicarboxylate (2.50 g, 6.57 mmol) and 3-octyl-5-trimethylstannylthiophene (7.20 g, 18.94 mmol) were dissolved in anhydrous DMF (75 mL) and the resulting mixture was purged 10 min with Ar.

Separately Pd(OAc)₂ (0.15 g, 0.66 mmol) and PPh₃ (0.70 g, 2.65 mmol) were placed in 5 mL of freshly distilled THF and stirred 10 min under argon. After the formation of a yellow precipitate, the catalyst was transferred in the DMF solution and the mixture was heated to 100°C overnight. The mixture was then filtered through celite and DMF was removed under reduced pressure. The crude product was purified by column chromatography (silica gel, hexane/CH₂Cl₂, 7:3) to afford 3.85 g (98%) of a transparent oil.
¹H NMR (200 MHz, CDCl₃) δ (ppm): 7.76 (s, 2H), 6.96 (d, 4J=1.4 Hz, 2H), 6.91 (d, 4J=1.4 Hz, 2H), 4.21 (q, 3J=7.1 Hz, 4H, OCH2), 2.60 (t, 3J=8.0 Hz, 4H), 1.65-1.55 (m, 4H), 1.45-1.25 (m, 20H), 1.16 (t, 3J=7.1 Hz, 6H, OCH2CH3,), 0.92-0.85 (m, 6H). Elemental analysis, found (calcd): C, 70.51 (70.78); H, 8.19 (8.25).

### II.3. 2,5-bis[4'-octylthien-2'-yl]-1,4-benzenedicarboxylic (FL46)

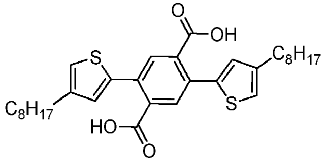

Elemental analysis, found (calcd): C, 69.35 (69.28); H, 7.50 (7.63).

### II.4. 3,8-dioctyl-4,9-dihydro-s-indaceno[1,2-b:5,6-b']dithiophene-4,9-dione (FL127)

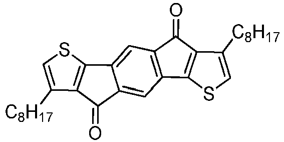

2,5-bis[4'-octylthien-2'-yl]-1,4-benzenedicarboxylic (1.0 g, 1.80 mmol) was dissolved in 70 mL of anhydrous CH₂Cl₂ under argon. Then oxalyl chloride (1.80 mL, 20.5 mmol) and 0.40 mL of DMF, were added and the mixture was stirred 12 h at room temperature. The solvent was removed under reduced pressure to obtain the crude 2,5-bis[4'-octylthien-2'-yl]-1,4-benzenedicarboxylic acid dichloride which was used without further purification.

The product was dissolved in 80 mL of anhydrous CH₂Cl₂ under argon, then cooled to 0°C and a suspension of AlCl₃ (0.72 g, 5.41 mmol) in 80 mL of anhydrous CH₂Cl₂ was added dropwise. The mixture was maintained at 0°C for 30 min and then allowed to warm to room temperature. After stirring 3 h at room temperature, the reaction mixture was poured into ice water and 1 M hydrochloric acid and extracted with chloroform. The organic layer was washed with water, dried over Na₂SO₄, filtered and concentrated under reduced pressure. Column chromatography (silica gel, hexane/CHCl₃, 7:3) afforded 0.78 g of a blue solid (84%).
¹H NMR (200 MHz, CDCl₃) δ (ppm): 7.18 (s, 2H), 6.79 (s, 2H), 2.71 (t, 3J=7.3 Hz, 4H), 1.69-1.62 (m, 3J=7.3 Hz, 4H), 1.40-1.26 (m, 20H), 0.92-0.84 (m, 6H). 13C NMR (CDCl3, 50 MHz): δ (ppm): 189.07 (2C=O), 161.15 (2C), 143.85 (2C), 143.54 (2C), 142.49 (2C), 142.38 (2C), 127.57 (2C), 117.09 (2C), 34.75 (2C), 32.28 (2C), 32.24 (2C), 32.20 (2C), 32.10 (2C), 31.28 (2C), 25.55 (2C), 17.02 (2C). Elemental analysis, found (calcd): C, 73.95 (74.09); H, 7.33 (7.38).

### II.5. 2,7-dibromo-3,8-dioctyl-4,9-dihydro-s-indaceno[1,2-b:5,6-b']dithiophene-4.9-dione (FL128)

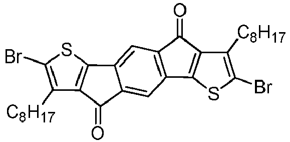

To a solution of 3,8-dioctyl-4,9-dihydro-s-indaceno[1,2-b:5,6-b']dithiophene-4,9-dione (1.0 g, 1.92 mmol) in 30 mL of CHCl₃ and 30 mL of AcOH, was added N-Bromosuccinimide (1,04 g, 2.92 mmol) in small portions over a period of 15 min. The reaction mixture was stirred 10 h at room temperature and then it was poured into water and extracted with CHCl₃. The organic layer was washed with NaHCO₃ and dried over Na₂SO₄.

The crude product was concentrated under reduced pressure and precipitated from hexane. The filtrate was washed with methanol and acetone and then dried under vacuum to give 1.26 g of a greenish solid (97%).
¹H NMR (200 MHz, C₂D₂Cl₄) δ (ppm): 7.14 (s, 2H), 2.71 (t, 3J=7.0 Hz, 4H), 2.61 (t, 3J=7.3 Hz, 4H), 1.67-1.50 (m, 4H), 1.25-1.10 (m, 20H), 0.95-0.85 (m, 6H). 13C NMR (C2D2Cl4, 50 MHz): δ (ppm): 185.28 (2C=O), 156.45 (2C), 139.83 (2C), 139.66 (4C), 138.18 (2C), 114.64 (2C), 113.64 (2C), 32.06 (2C), 29.50 (2C), 29.42 (2C), 29.37 (2C), 29.07 (2C), 27.46 (2C), 22.87 (2C), 14.36 (2C).

### II.6. 2,7-bis(4-octylthien-2-yl)-3,8-dioctyl-4,9-dihydro-s-indaceno[1,2-b:5,6-b']dithiophene-4,9-dione (FL136)

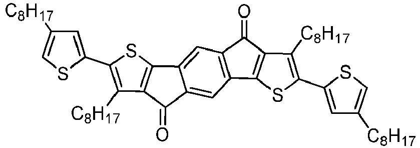

This product was synthesized starting from 2,7-dibromo-3,8-dioctyl-4,9-dihydro-s-indaceno[1,2-b:5,6-b']dithiophene-4,9-dione (0.65 g, 0.96 mmol) and 3-octyl-5-trimethylstannylthiophene (2.5 eq) according to the Stille palladium-catalyzed coupling procedure described above.

After usual work up, the product was purified by column chromatography (silica gel, hexane/CHCl₃, 7:3) to give 0.62 g (72%) of a green-blue solid.
¹H NMR (200 MHz, CDCl₃) δ (ppm): 7.14 (s, 2H), 6.98 (d, 4J=1.2 Hz, 2H), 6.94 (d br, 2H), 2.85 (t, 3J=6.8 Hz, 4H), 2.61 (t, 3J=7.3 Hz, 4H), 1.75-1.52 (m, 8H), 1.45-1.20 (m, 40H), 0.95-0.80 (m, 12H). 13C NMR (CDCl3, 50 MHz): δ (ppm): 186.57 (2C=O), 155.31 (2C), 143.83 (2C), 140.55 (2C), 140.33 (2C), 139.43 (2C), 136.37 (4C), 134.36 (2C), 127.81 (2C), 120.91 (2C), 114.07 (2C), 31.89 (4C), 30.42 (4C), 29.57 (4C), 29.43 (4C), 29.34 (4C), 29.28 (4C), 22.68 (4C), 14.13 (4C). Elemental analysis, found (calcd): C, 73.85 (74.12); H, 8.14 (8.22); S, 13.95 (14.13).

### II.7. 2,7-bis(5-[(E)-1,2-bis(3-octylthien-2-yl)ethylenel)-3,8-dioctyl-4,9-dihydro-s-indaceno[1,2-b:5,6-b']dithiophene-4,9-dione (FL137)

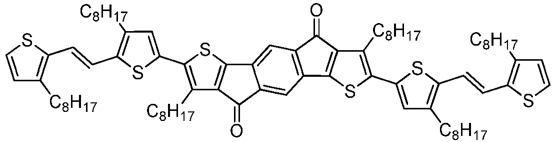

This product was synthesized starting from 2,7-dibromo-3,8-dioctyl-4,9-dihydro-s-indaceno[1,2-b:5,6-b']dithiophene-4,9-dione (0.50 g, 0.74 mmol) and [E-(5-(3-octylthien-2-yl-vinyl)-(3-octylthien-2-yl)]-trimethyltin (2.2 eq.) according to the Stille palladium-catalyzed coupling procedure described above. After usual work up, the product was purified by column chromatography (silica gel, hexane/CHCl3, 8:2) to give 0.62 g (63%) of a dark greenish solid.
¹H NMR (200 MHz, CDCl₃) δ (ppm): 7.12 (s, 2H), 7.09 (d, 3J=5.1 Hz, 2H), 6.96 (s br, 4H), 6.90 (s, 2H), 6.86 (d, 3J=5.1 Hz, 2H), 2.91 (t, 3J=7.4 Hz, 4H), 2.75-2.55 (m, 3J=7.4 Hz, 8H), 1.75-1.50 (m, 12H), 1.45-1.15 (m, 60H), 0.90-0.80 (m, 18H). 13C NMR (CDCl3, 50 MHz): δ (ppm): 186.53 (2C=O), 155.05 (2C), 141.29 (2C), 141.21 (2C), 140.73 (2C), 140.41 (2C), 139.38 (2C), 137.18 (2C), 136.53 (2C), 136.27 (2C), 136.07 (2C), 131.56 (2C), 129.89 (2C), 128.69 (2C), 122.96 (2C), 119.86 (2C), 118.53 (2C), 114.02 (2C), 31.90 (6C), 30.93 (2C), 30.82 (2C), 29.89 (2C), 29.63 (2C), 29.47 (2C), 29.44 (2C), 29.39 (4C), 29.34 (2C), 29.33 (2C), 29.29 (4C), 28.46 (2C), 28.39 (2C), 27.16 (2C), 22.69 (6C), 14.13 (6C). Elemental analysis, found (calcd): C, 74.25 (74.83); H, 8.53 (8.52).

### III. Synthesis of 2,7-bis(2,3-dihydrothieno[3,4-b][1,4]dioxin-5-yl)-3,8-dioctyl-s-indaceno[1,2-b:5,6-b']dithiophene-4,9-dione (DJ313)

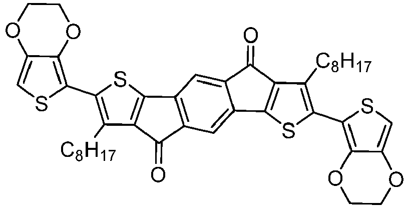

Under argon, 3,4-Ethylenedioxythiophene (63 mg, 0.44 mmol) was dissolved in distilled THF (8 mL) then n-BuLi (0.20 mL, 0.49 mmol) was added at -78°C. The solution was stirred for an hour at -50°C before adding a n-hexane solution of trimethyltin chloride (0.49 mL, 0.49 mmol) at -78°C. The solution was allowed to reach room temperature and stirred for 2 hours. The reaction was quenched with water and the organic phase was extracted with n-hexane, dried on Na₂SO₄, filtered and concentrated under vacuum. The resulting oil was engaged without any further purification in a Stille coupling with 4- 2,7-dibromo-3,8-dioctyl-s-indaceno[1,2-b:5,6-b']dithiophene-4,9-dione. Under argon, solids stannic, 2,7-dibromo-3,8-dioctyl-s-indaceno[1,2-b:5,6-b']dithiophene-4,9-dione (100 mg, 0.15 mmol), tris(dibenzylideneacetone)dipalladium (5.4 mg, 6 µmol) and tri(o-tolyl)phosphine (3.6 mg, 12 µmol) were dissolved in anhydrous toluene (8 mL) and refluxed for 14 h. The mixture was then poured into HCl (2 M). The organic phase was extracted with diethyl ether, washed with HCl (2 M), dried over Na₂SO₄ and concentrated. The crude solid was chromatographed on silica using petroleum ether/CHCl₃ 1:1 as eluent to afford green solid (118 mg, 0.10 mmol, 70%).
1H NMR (CDCl3, 400 MHz): δ = 7.18 (s, 2H), 6.44 (s, 1H), 4.31 (m, 8H), 2.86 (t, J=7.8Hz, 4H), 1.72-1.60 (m, 4H), 1.45-1.20 (m, 24H), 0.90 (t, 1H, J=6.8Hz).
1H NMR (CDCl3, 400 MHz): δ = 186.66, 156.78, 141.48, 140.54, 139.83, 139.69, 139.04, 137.74, 132.72, 114.09, 99.81, 65.00, 64.46, 31.90, 29.87, 29.62, 29.35, 29.26, 27.33, 22.68, 14.126.

### IV. Characterization of FL136 and FL137 by electrochemistry

Cyclic voltammetry experiments were performed in an argon glove box, using a one-compartment electrolytic cell with a platinum disk working electrode (7 mm² surface area), a platinum counter electrode and an Ag/0.01 mol.L⁻¹ AgNO₃ reference electrode. The electrolyte consisted of 0.1 mol.L¹ tetrabutylammonium tetrafluoroborate (Bu₄NBF₄) solution in dichloromethane, to which 2.10⁻³ mol.L⁻¹ of FL136 or 1.5.10⁻³ mol.L⁻¹ of FL137 were added. The results of this characterization are presented in Figure 1A for FL136 and at Figure 1B for FL137.

### V. Preparation of poly(FL136) and poly(FL137) by oxidative polymerization

### V.1. Poly(FL136)

A solution of 145 mg of anhydrous ferric chloride (0.89 mmol) in a mixed solvent consisting of 4 mL of nitromethane and 5 mL of chloroform was added dropwise to a solution of FL136 (200 mg, 0.2204 mmol) in 30 mL of freshly distilled and degassed chloroform. The addition was performed at 0°C with constant stirring over a period of 90 min. At the end of the addition, the mixture was warmed to 10°C and was maintained at this temperature for an additional period of 60 min. The reaction mixture was then allowed to warm to room temperature and stirred for 5 h. Subsequently, it was concentrated by pumping under vacuum and then precipitated in 100 mL of methanol. The crude polymer was then dissolved in 50 mL of chloroform and washed four times with a 0.1 M aqueous solution of ammonia (150 mL each time). In the next step the polymer was stirred for 48 h with the same aqueous solution.

As-synthesized polymer usually contains small amounts of dopants of unidentified chemical nature and requires further dedoping. The dedoping was achieved by washing the chloroform solution of the polymer with an EDTA aqueous solution (0.05 M, 200 mL). The polymer was then washed with water twice and acetone and then dried under vacuum to give 185 mg (93%) of a dark powder. The product is then fractionated with a Sohxlet apparatus using chloroform and chlorobenzene.

Size exclusion chromatography analysis of the batch: Mn[kDa eq. PS]= 3.7643 kDa eq. PS; Mw[kDa eq. PS]= 4.9664 kDa eq. PS; I=Mw/Mn= 1.3194; Mw up to[kDa eq. PS]^{∼} 20.0 kDa eq. PS.

### V.2. Poly(FL137)

The same procedure as described above was employed using 200 mg of FL137 and 97 mg of iron chloride. The polymer was obtained as a dark powder (150 mg).

Size exclusion chromatography analysis of the batch: Mn[kDa eq. PS]= 3.3648 kDa eq. PS; Mw[kDa eq. PS]= 4.1824 kDa eq. PS; I=Mw/Mn= 1.2430; Mw up to[kDa eq. PS]^{∼} 15.0 kDa eq. PS.

### VI. Electrodes made using FL137

### VI.1. Preparation of electrodes using FL137

*Growth of SiNWs* : Highly doped SiNWs electrodes with a length of approximately 20 µm and a diameter of 50 nm were grown in a CVD reactor (EasyTube3000 First Nano, a Division of CVD Equipment Corporation) by using the vapor-liquid-solid (VLS) method via gold catalysis on highly doped p-Si(111) substrate using an optimal deposition procedure, which has been previously detailed **[25].** Briefly, the SiNWs were grown from a colloidal gold catalyst performed at 600°C, under 6 Torr total pressure, with 40 sccm (standard cubic centimeters) of SiH₄, 100 sccm of B₂H₆ gas (0.2% B₂H₆ in H₂) for p doping, 100 sccm of HCI gas and 700 sccm of H₂ as supporting gas.

*Electropolymerization of FL137 on SiNWs* : FL137 films were electrochemically deposited from a CH₂Cl₂ solution containing 0.1 M tetrabutylammonium hexafluorophosphate (NBu₄PF₆) and 1.5 mM FL137 as the monomer using an AUTOLAB PGSTAT 302 N potentiostat-galvanostat. The electropolymerization was conducted in a 3-electrode electrochemical cell. SiNWs was employed as the working electrode, a Pt wire was used as the counter electrode and the nonaqueous Ag/Ag⁺ reference electrode was composed of a silver wire immersed in a 10 mM silver trifluoromethanesulfonate (AgTf) solution in N-methyl-N-propylpyrrolidinium bis(trifluoromethylsulfonyl)imide (PYR₁₃ TFSI). The electrochemical deposition of FL137 was carried out by potentiostatic methods using a constant potential (1 V) controlled by the chronocoulometry technique (Total polymerization charge of 20 mC) in an argon-filled glove box with oxygen and water levels less than 1 ppm. After the electrochemical deposition, the electrodes were washed in acetone and dried with a N₂ flow before the electrochemical characterization.

### VI.2. Characterization of electrodes thus prepared

*Morphological characterization* : The morphologyof the resulting SiNWs and hybrid SiNWs electrodes was examined by scanning electron microscopy. A Zeiss Ultra 55 scanning microscope operating at an accelerating voltage of 10 kV was used.

*Electrochemical characterization* : FL137-coated SiNWs electrode was evaluated in a 3-electrode cell configuration using PYR₁₃ TFSI as electrolyte. The hybrid electrode was employed as the working electrode, a Pt wire was used as the counter electrode and the nonaqueous Ag/Ag⁺ reference electrode was composed of a silver wire immersed in a 10 mM silver trifluoromethanesulfonate (AgTf) solution in PYR₁₃ TFSI.

*Performance and configuration of the device* : Symmetric micro-supercapacitors were designed from hybrid nanostructured electrodes made of FL137-coated SiNWs as mentioned in the previous section. A homemade two-electrode supercapacitor cell was built by assembling two hybrid nanostructured material - based electrodes (1cm²) separated by a Whatman glass fiber paper separator soaked with butyl-trimethyl ammonium bis(trifluoromethylsulfonyl)imide (N₁₁₁₄ BTA) as electrolyte. Cyclic voltammetry (CV) and galvanostatic charge-discharge cycles were performed using a multichannel VMP3 potentiostat/galvanostat with Ec-Lab software (Biologic, France). All measurements were carried out using N₁₁₁₄ BTA as electrolyte in an argon-filled glove box with oxygen and water levels less than 1 ppm at room temperature.

*Results* : The morphology of SiNWs and FL137-coated SiNW electrodes was analyzed by scanning electron microscopy as displayed in Figures 2A and 2B. Figure 2A shows the view of SiNWs grown by CVD on silicon substrates. The length of SiNWs was estimated to be 20 µm and the density of SiNWs was determined to be 3.10⁹ nanowires per cm² with a diameter of 50 nm according to the inventors' previous works **[26].** The functionalization of SiNW electrodes using FL137 as an electroactive pseudo-capacitive material was carried out using an electrochemical deposition as mentioned in the previous section. Thus, FL137 was deposited electrochemically on SiNWs using a potentiostatic method at a constant potential. As a result, a uniform and homogeneous nanometric FL137 coating was deposited onto SiNWs with a smooth globular morphology as illustrated in Figure 2B. The confirmation of the polymer coating was corroborated by EDX analysis (S and O). Figure 2C presents the cyclic voltammogramm of 1.5 mM FL137 in CH₂Cl₂ with 0.1 M NBu₄PF₆ on highly doped silicon substrates (0.4 cm²), which was recorded at a scan rate of 50 mV s⁻¹ using a potential range from -2.00 V to 1.4 V. As can be seen, a pair of oxidation-reduction peaks were detected, which are associated with the oxidation and reduction of FL137. The reduction peak is ascribed with the de-intercalation of anion (TFSI⁻) from the FL137 film due to the reduction of the polymer from the oxidized to the neutral state, whereas the oxidation peak reflects the intercalation of anions into the polymeric structure. The electrochemical response of FL137-coated SiNWs was evaluated in a 3-electrode cell configuration in presence of PYR₁₃TFSI as displayed in Figure 2D. Figure 2D displays a CV curve evidencing its excellent electrochemical behaviour as well as an outstanding electroactivity and storage charge (85 F/g).

Figure 3 shows the electrochemical performance of a symmetric supercapacitor based on FL137-coated SiNW electrodes using N₁₁₁₄ BTA as electrolyte within a voltage cell of 3 V. As can be seen in Figure 3A, the hybrid device shows a higher capacitance than SiNW-based supercapacitor due to the pseudocapacitive effect induced by the polymer coating on SiNW surface. This phenomena was demonstrated at wide range of scan rates from 0.2 to 2 Vs⁻¹ reflecting an excellent capacitive behaviour (Figure 3B).

Concerning one of the most important criteria in a supercapacitor, cycling stability, the lifetime of the device was evaluated by applying successive galvanostatic cycles at a high current density of 1 mA.cm⁻². Thus, the device was able to retain more than 80% after 25000 complete galvanostatic cycles demonstrating its enormous potential in terms of lifespan (Figure 3C).

This cycling stability value was compared with similar systems based on electroactive conducting polymers. Consequently, PEDOT-coated SiNW and PPy-coated Silicon Nanotree supercapacitors reflected a loss of specific capacitance of 20% and 30% after 3,500 and 10,000 charge-discharge cycles respectively [9]. The use of electroactive conducting polymers for supercapacitor devices is limited due to their poor cycling stability (typically a few thousand cycles).

### REFERENCES

[1] Aradilla et al, Nano Energy, 2014, 9, 273.
[2] Patent application the number of which is FR 1 253 690 and published under the number FR 2 989 838.
[3] Patent application US 2015/364267.
[4] Aradilla et al, Electrochem. Commun., 2016, 63, 34.
[5] Devarapalli et al, ACS Appl. Mater. Interfaces 2016, 8, 4298.
[6] Lu et al, Appl. Phys. A, 2011, 104, 545.
[7] Dubal et al, Scientific Reports 2015, 5, 9771.
**[8]** Gu et al, J. Power Sources 2015, 273, 479.
[9] Aradilla et al, J. Mater. Chem. A 2015, 3, 13978.
[10] Zhu et al, Beilstein J. Nanotechnol. 2015, 6, 640.
[11] He et al, Small, 2012, 8, 1664.
[12] Sato et al, Nanoscale 2014, 6, 6092.
[13] Dkhil et al, Synthetic Metals, 2014, 192, 74
[14] Dkhil et al, Synthetic Metals, 2012, 162, 1120.
[15] Chehata et al, J. Luminescence, 2015, 168, 315.
[16] Yao et al, Energy Environ. Sci., 2012, 5, 7927.
[17] Liang et al, J. Am. Chem. Soc. 2015, 137, 4956.
[18] Bachman et al, Nat. Commun. 2015, 6, 7040.
[19] Patent application US 2004/057191.
[20] Patent US 7,382,603.
[21] Lee et al, Nanomaterials 2014, 4, 599.
[22] Patent US 5,840,443.
[23] Zhao et al, Journal of Polymer Science Part A: Polymer Chemistry, 2008, 46, 8.
[24] Patent application US 2007/289625.
[25] Gentile et al, Nanotechnology 2012, 23, 215702.
[26] Thissandier et al, Nano Energy. 2014, 5, 20.

## Claims

1. Electrode comprising :
- a support made of a conductor or semiconductor,
- at least one nanostructure made of a conductor or semiconductor, on at least one of the support surfaces,
- a layer of redox polymer deposited onto the at least one nanostructure,
wherein the redox polymer is of formula (I) : 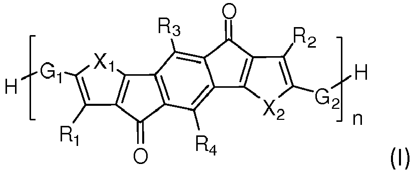 in which
n is an integer selected from the range 2 to 10,000;
X₁ and X₂, which are identical or different, each independently is selected from the group consisting of S, O and Se;
R₁, R₂, R₃ and R₄, which are identical or different, each independently is selected from the group consisting of a hydrogen, a halogen, an optionally substituted alkyl, an optionally substituted alkylaryl and an optionally substituted arylalkyl;
G₁ and G₂, which are identical or different, each independently represents a group of formula (II) : 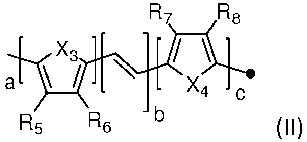 in which
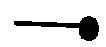 represents the covalent bond linking the G₁ or G₂ group with the dione unit in the polymer of formula (I);
X₃ and X₄, which are identical or different, each independently is selected from the group consisting of S, O and Se;
R₅, R₆, R₇ and R₈, which are identical or different, each independently is selected from the group consisting of a hydrogen atom, a halogen atom, an optionally substituted alkyl group, an optionally substituted arylalkyl group and an optionally substituted alkylaryl group or R₅ and R₆ and/or R₇ and R₈ form together a bridging group;
a is selected from the group consisting of 1, 2, 3, 4, 5, 6, 7, 8, 9, 10, 11, 12, 13, 14 and 15, and
b and c, which are identical or different, each independently is selected from the group consisting of 0, 1, 2, 3, 4, 5, 6, 7, 8, 9, 10, 11, 12, 13, 14 and 15.

2. Electrode according to claim 1, wherein X₁ and X₂ both represent S.

3. Electrode according to claim 1 or 2, wherein the groups R₁ and R₂ are identical and advantageously represent a hydrogen atom, an optionally substituted alkyl group, an optionally substituted arylalkyl group or an optionally substituted alkylaryl group.

4. Electrode according to any of claims 1 to 3, wherein the groups R₃ and R₄ are identical and advantageously both represent a hydrogen.

5. Electrode according to any of claims 1 to 4, wherein, in said G₁ group and/or said G₂ group, X₃ and X₄ both represent S.

6. Electrode according to any of claims 1 to 5, wherein, in said G₁ group and/or said G₂ group, R₅ and R₈ represent a hydrogen atom and R₆ and R₇ are identical and represent an optionally substituted alkyl group.

7. Electrode according to any of claims 1 to 6, wherein, in said G₁ group and/or said G₂ group, R₅ and R₆ form together a bridging group and R₇ and R₈ form together a bridging group, these bridging groups being identical.

8. Electrode according to any of claims 1 to 7, wherein the redox polymer of formula (I) is
- the redox polymer of formula (I) in which X₁ = X₂ = S ; R₁ = R₂ = an octyl radical; R₃ = R₄ = H ; G₁ = G₂ = a group of formula (II) in which b = c = 0 and a = 1 with X₃ = S, R₆ = H and R₅ = an octyl radical;
- the redox polymer of formula (I) in which X₁ = X₂ = S ; R₁ = R₂ = an octyl radical; R₃ = R₄ = H ; G₁ = G₂ = a group of formula (II) in which a = b = c = 1 with X₃ = X₄ = S, R₅ = R₈ = a hydrogen atom and R₆ = R₇ = an octyl radical;
- the redox polymer of formula (I) in which X₁ = X₂ = S ; R₁ = R₂ = an octyl radical; R₃ = R₄ = H ; G₁ = G₂ = a group of formula (II) in which b = c = 0 and a = 1 with X₃ = S and R₅ and R₆ together form a bridging group of formula -O-(CH₂)₂-O-; or
- the redox polymer of formula (I) in which X₁ = X₂ = S ; R₁ = R₂ = an octyl radical; R₃ = R₄ = H ; G₁ = G₂ = a group of formula (II) in which b = c = 0 and a = 1 with X₃ = S and R₅ and R₆ together form a bridging group of formula -O-(CH₂)-C(CH₃)₂-(CH₂)-O-.

9. Electrode according to any of claims 1 to 8, wherein said support is made of silicon and advantageously doped silicon.

10. Electrode according to any of claims 1 to 9, wherein said nanostructure is made of silicon and advantageously doped silicon.

11. Device for storing and releasing electrical energy comprising at least one electrode as defined in any of claims 1 to 10.

12. Device for storing and releasing electrical energy according to claim 11, wherein said device comprises at least two electrodes as defined in any of claims 1 to 10.

13. Device for storing and releasing electrical energy according to claim 11 or 12, wherein said device is a battery, a dielectric capacitor, a supercapacitor or a hybrid system that can act simultaneously as a capacitor or a battery.

14. Method for preparing an electrode as defined in any of claims 1 to 10, said method comprising the steps consisting in :
a) preparing a redox polymer of formula (I), and
b) depositing said redox polymer onto the at least one nanostructure present on at least one surface of the support.

15. Method for preparing an electrode as defined in any of claims 1 to 10, said method comprising the steps consisting in :
a') putting into contact the support presenting on at least one of its surface a nanostructure with a solution comprising different or identical monomers of formula (VII) : 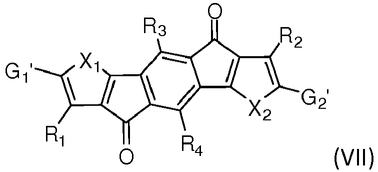
in which X₁, X₂, R₁, R₂, R₃ and R₄ are as defined in any of claims 1 to 4 and
G₁' and G₂', which are identical or different, each independently represents a group of formula (VIII) : 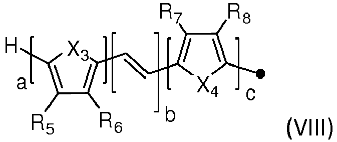 in which 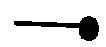 , X₃, X₄, R₅, R₆, R₇ and R₈ are as defined in any of claims 1 and 5 to 7,
b') electropolymerizing said monomers whereby redox polymer of formula (I) is formed.

## Patentansprüche

1. Elektrode, umfassend:
- einen Träger, der aus einem Leiter oder Halbleiter hergestellt ist,
- mindestens eine Nanostruktur, die aus einem Leiter oder Halbleiter hergestellt ist, auf mindestens einer der Trägeroberflächen,
- eine Schicht eines Redoxpolymers, die auf der mindestens einen Nanostruktur abgeschieden ist,
wobei das Redoxpolymer die Formel (I) 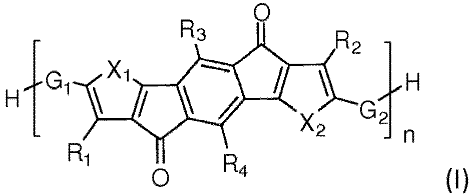 hat, in der
n eine ganze Zahl ist, die aus dem Bereich von 2 bis 10000 ausgewählt ist;
X₁ und X₂, die identisch oder verschieden sind, jeweils unabhängig aus der Gruppe, bestehend aus S, O und Se, ausgewählt sind;
R₁, R₂, R₃ und R₄, die identisch oder verschieden sind, jeweils unabhängig aus der Gruppe, bestehend aus Wasserstoff, einem Halogen, einem gegebenenfalls substituierten Alkyl, einem gegebenenfalls substituierten Alkylaryl und einem gegebenenfalls substituierten Arylalkyl, ausgewählt sind;
G₁ und G₂, die identisch oder verschieden sind, jeweils unabhängig eine Gruppe mit der Formel (II) 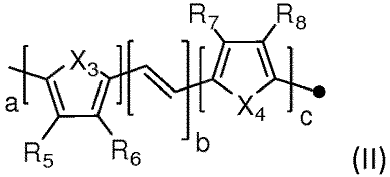 darstellen, in der
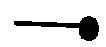 die kovalente Bindung darstellt, welche die G₁- oder G₂-Gruppe mit der Dion-Einheit in dem Polymer mit der Formel (I) verknüpft;
X₃ und X₄, die identisch oder verschieden sind, jeweils unabhängig aus der Gruppe, bestehend aus S, O und Se, ausgewählt sind;
R₅, R₆, R₇ und R₈, die identisch oder verschieden sind, jeweils unabhängig aus der Gruppe, bestehend aus einem Wasserstoffatom, einem Halogenatom, einer gegebenenfalls substituierten Alkylgruppe, einer gegebenenfalls substituierten Arylalkylgruppe und einer gegebenenfalls substituierten Alkylarylgruppe, ausgewählt sind oder R₅ und R₆ und/oder R₇ und R₈ zusammen eine Verbrückungsgruppe bilden;
a aus der Gruppe, bestehend aus 1, 2, 3, 4, 5, 6, 7, 8, 9, 10, 11, 12, 13, 14 und 15, ausgewählt ist, und
b und c, die identisch oder verschieden sind, jeweils unabhängig aus der Gruppe, bestehend aus 0, 1, 2, 3, 4, 5, 6, 7, 8, 9, 10, 11, 12, 13, 14 und 15, ausgewählt sind.

2. Elektrode nach Anspruch 1, wobei X₁ und X₂ beide S darstellen.

3. Elektrode nach Anspruch 1 oder 2, bei der die Gruppen R₁ und R₂ identisch sind und in vorteilhafter Weise ein Wasserstoffatom, eine gegebenenfalls substituierte Alkylgruppe, eine gegebenenfalls substituierte Arylalkylgruppe oder eine gegebenenfalls substituierte Alkylarylgruppe darstellen.

4. Elektrode nach einem der Ansprüche 1 bis 3, bei der die Gruppen R₃ und R₄ identisch sind und in vorteilhafter Weise ein Wasserstoffatom darstellen.

5. Elektrode nach einem der Ansprüche 1 bis 4, bei der in der G₁-Gruppe und/oder der G₂-Gruppe X₃ und X₄ beide S darstellen.

6. Elektrode nach einem der Ansprüche 1 bis 5, bei der in der G₁-Gruppe und/oder der G₂-Gruppe R₅ und R₈ ein Wasserstoffatom darstellen und R₆ und R₇ identisch sind und eine gegebenenfalls substituierte Alkylgruppe darstellen.

7. Elektrode nach einem der Ansprüche 1 bis 6, bei der in der G₁-Gruppe und/oder der G₂-Gruppe R₅ und R₆ zusammen eine Verbrückungsgruppe bilden und R₇ und R₈ zusammen eine Verbrückungsgruppe bilden, wobei diese Verbrückungsgruppen identisch sind.

8. Elektrode nach einem der Ansprüche 1 bis 7, bei der das Redoxpolymer mit der Formel (I)
- das Redoxpolymer mit der Formel (I), in der X₁ = X₂ = S; R₁ = R₂ = ein Octylrest; R₃ = R₄ = H; G₁ = G₂ = eine Gruppe mit der Formel (II), in der b = c = 0 und a = 1, wobei X₃ = S, R₆ = H und R₅ = ein Octylrest;
- das Redoxpolymer mit der Formel (I), in der X₁ = X₂ = S; R₁ = R₂ = ein Octylrest; R₃ = R₄ = H; G₁ = G₂ = eine Gruppe mit der Formel (II), in der a = b = c = 1, wobei X₃ = X₄ = S, R₅ = R₈ = ein Wasserstoffatom und R₆ = R₇ = ein Octylrest;
- das Redoxpolymer mit der Formel (I), in der X₁ = X₂ = S; R₁ = R₂ = ein Octylrest; R₃ = R₄ = H; G₁ = G₂ = eine Gruppe mit der Formel (II), in der b = c = 0 und a = 1, wobei X₃ = S und R₅ und R₆ zusammen eine Verbrückungsgruppe mit der Formel -O-(CH₂)₂-O- bilden; oder
- das Redoxpolymer mit der Formel (I), in der X₁ = X₂ = S; R₁ = R₂ = ein Octylrest; R₃ = R₄ = H; G₁ = G₂ = eine Gruppe mit der Formel (II), in der b = c = 0 und a = 1, wobei X₃ = S und R₅ und R₆ zusammen eine Verbrückungsgruppe mit der Formel -O-(CH₂)-C(CH₃)₂-(CH₂)-O- bilden, ist.

9. Elektrode nach einem der Ansprüche 1 bis 8, bei welcher der Träger aus Silizium und in vorteilhafter Weise dotiertem Silizium hergestellt ist.

10. Elektrode nach einem der Ansprüche 1 bis 9, bei der die Nanostruktur aus Silizium und in vorteilhafter Weise dotiertem Silizium hergestellt ist.

11. Vorrichtung zum Speichern und Freisetzen von elektrischer Energie, die mindestens eine Elektrode nach einem der Ansprüche 1 bis 10 umfasst.

12. Vorrichtung zum Speichern und Freisetzen von elektrischer Energie nach Anspruch 11, wobei die Vorrichtung mindestens zwei Elektroden nach einem der Ansprüche 1 bis 10 umfasst.

13. Vorrichtung zum Speichern und Freisetzen von elektrischer Energie nach Anspruch 11 oder 12, wobei die Vorrichtung eine Batterie, ein Dielektrikum-Kondensator, ein Superkondensator oder ein Hybridsystem ist, das gleichzeitig als Kondensator oder als Batterie wirken kann.

14. Verfahren zur Herstellung einer Elektrode nach einem der Ansprüche 1 bis 10, wobei das Verfahren die Schritte umfasst, die bestehen aus:
a) Herstellen eines Redoxpolymers mit der Formel (I), und
b) Abscheiden des Redoxpolymers auf der mindestens einen Nanostruktur, die auf mindestens einer Oberfläche des Trägers vorliegt.

15. Verfahren zur Herstellung einer Elektrode nach einem der Ansprüche 1 bis 10, wobei das Verfahren die Schritte umfasst, die bestehen aus:
a') Inkontaktbringen des Trägers, bei dem auf mindestens einer Oberfläche davon eine Nanostruktur vorliegt, mit einer Lösung, die verschiedene oder identische Monomere mit der Formel (VII) umfasst: 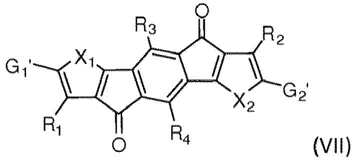
worin X₁, X₂, R₁, R₂, R₃ und R₄ derart sind, wie es in einem der Ansprüche 1 bis 4 festgelegt ist, und
G₁' und G₂', die identisch oder verschieden sind, jeweils unabhängig eine Gruppe mit der Formel (VIII) darstellen: 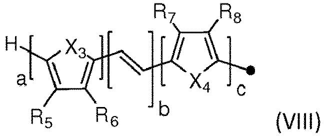 worin 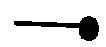 , X₃, X₄, R₅, R₆, R₇ und R₈ derart sind, wie es in einem der Ansprüche 1 und 5 bis 7 festgelegt ist,
b') Elektropolymerisieren der Monomere, wodurch das Redoxpolymer mit der Formel (I) gebildet wird.

## Revendications

1. Electrode comprenant :
- un support constitué d'un conducteur ou semi-conducteur,
- au moins une nanostructure constituée d'un conducteur ou semi-conducteur, sur au moins l'une des surfaces du support,
- une couche de polymère redox déposée sur l'au moins une nanostructure,
dans laquelle le polymère redox est de formule (I) : 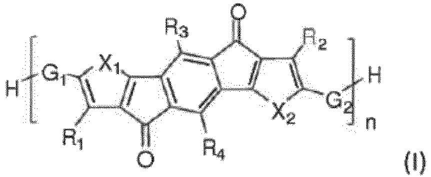 où
n est un entier choisi dans la plage de 2 à 10 000 ;
X₁ et X₂, qui sont identiques ou différents, sont chacun indépendamment choisis dans le groupe constitué par S, O et Se ;
R₁, R₂, R₃ et R₄, qui sont identiques ou différents, sont chacun indépendamment choisis dans le groupe constitué par un hydrogène, un halogène, un alkyle éventuellement substitué, un alkylaryle éventuellement substitué et un arylalkyle éventuellement substitué ;
G₁ et G₂, qui sont identiques ou différents, représentent chacun indépendamment un groupe de formule (II) : 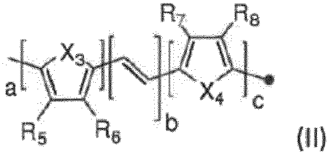 où 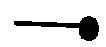
représente la liaison covalente reliant le groupe G₁ ou G₂ à l'unité dione dans le polymère de formule (I) ;
X₃ et X₄, qui sont identiques ou différents, sont chacun indépendamment choisis dans le groupe constitué par S, O et Se ;
R₅, R₆, R₇ et R₈, qui sont identiques ou différents, sont chacun indépendamment choisis dans le groupe constitué par un atome d'hydrogène, un atome d'halogène, un groupe alkyle éventuellement substitué, un groupe arylalkyle éventuellement substitué et un groupe alkylaryle éventuellement substitué ou R₅ et R₆ et/ou R₇ et R₈ forment ensemble un groupe pontant ;
a est choisi dans le groupe constitué par 1, 2, 3, 4, 5, 6, 7, 8, 9, 10, 11, 12, 13, 14 et 15, et
b et c, qui sont identiques ou différents, sont chacun indépendamment choisis dans le groupe constitué par 0, 1, 2, 3, 4, 5, 6, 7, 8, 9, 10, 11, 12, 13, 14 et 15.

2. Electrode selon la revendication 1, dans laquelle X₁ et X₂ représentent tous deux S.

3. Electrode selon la revendication 1 ou 2, dans laquelle les groupes R₁ et R₂ sont identiques et avantageusement représentent un atome d'hydrogène, un groupe alkyle éventuellement substitué, un groupe arylalkyle éventuellement substitué ou un groupe alkylaryle éventuellement substitué.

4. Electrode selon l'une quelconque des revendications 1 à 3, dans laquelle les groupes R₃ et R₄ sont identiques et avantageusement représentent tous deux un hydrogène.

5. Electrode selon l'une quelconque des revendications 1 à 4, dans laquelle, dans ledit groupe G₁ et/ou ledit groupe G₂, X₃ et X₄ représentent tous deux S.

6. Electrode selon l'une quelconque des revendications 1 à 5, dans laquelle, dans ledit groupe G₁ et/ou ledit groupe G₂, R₅ et R₈ représentent un atome d'hydrogène et R₆ et R₇ sont identiques et représentent un groupe alkyle éventuellement substitué.

7. Electrode selon l'une quelconque des revendications 1 à 6, dans laquelle, dans ledit groupe G₁ et/ou ledit groupe G₂, R₅ et R₆ forment ensemble un groupe pontant et R₇ et R₈ forment ensemble un groupe pontant, ces groupes pontant étant identiques.

8. Electrode selon l'une quelconque des revendications 1 à 7, dans laquelle le polymère redox de formule (I) est
- le polymère redox de formule (I) dans laquelle X₁ = X₂ = S ; R₁ = R₂ = un radical octyle ; R₃ = R₄ = H ; G₁ = G₂ = un groupe de formule (II) dans laquelle b = c = 0 et a = 1 avec X₃ = S, R₆ = H et R₅ = un radical octyle ;
- le polymère redox de formule (I) dans laquelle X₁ = X₂ = S ; R₁ = R₂ = un radical octyle ; R₃ = R₄ = H ; G₁ = G₂ = un groupe de formule (II) dans laquelle a = b = c = 1 avec X₃ = X₄ = S, R₅ = R₈ = un atome d'hydrogène et R₆ = R₇ = un radical octyle ;
- le polymère redox de formule (I) dans laquelle X₁ = X₂ = S ; R₁ = R₂ = un radical octyle ; R₃ = R₄ = H ; G₁ = G₂ = un groupe de formule (II) dans laquelle b = c = 0 et a = 1 avec X₃ = S et R₅ et R₆ forment ensemble un groupe pontant de formule -O-(CH₂)₂-O- ; ou
- le polymère redox de formule (I) dans laquelle X₁ = X₂ = S ; R₁ = R₂ = un radical octyle ; R₃ = R₄ = H ; G₁ = G₂ = un groupe de formule (II) dans laquelle b = c = 0 et a = 1 avec X₃ = S et R₅ et R₆ forment ensemble un groupe pontant de formule -O-(CH₂)-C(CH₃)₂-(CH₂)-O-.

9. Electrode selon l'une quelconque des revendications 1 à 8, dans laquelle ledit support est constitué de silicium et avantageusement de silicium dopé.

10. Electrode selon l'une quelconque des revendications 1 à 9, dans laquelle ladite nanostructure est constituée de silicium et avantageusement de silicium dopé.

11. Dispositif pour le stockage et la libération d'énergie électrique comprenant au moins une électrode telle que définie dans l'une quelconque des revendications 1 à 10.

12. Dispositif pour le stockage et la libération d'énergie électrique selon la revendication 11, dans lequel ledit dispositif comprend au moins deux électrodes telles que définies dans l'une quelconque des revendications 1 à 10.

13. Dispositif pour le stockage et la libération d'énergie électrique selon la revendication 11 ou 12, dans lequel ledit dispositif est une batterie, un condensateur diélectrique, un supercondensateur ou un système hybride qui peut agir simultanément en tant que condensateur ou batterie.

14. Procédé de préparation d'une électrode telle que définie dans l'une quelconque des revendications 1 à 10, ledit procédé comprenant les étapes consistant à :
a) préparer un polymère redox de formule (I), et
b) déposer ledit polymère redox sur l'au moins une nanostructure présente sur au moins une surface du support.

15. Procédé de préparation d'une électrode telle que définie dans l'une quelconque des revendications 1 à 10, ledit procédé comprenant les étapes consistant à :
a') mettre en contact le support présentant sur au moins l'une de ses surfaces une nanostructure avec une solution comprenant des monomères différents ou identiques de formule (VII) : 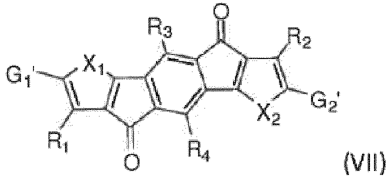
où X₁, X₂, R₁, R₂, R₃ et R₄ sont tels que définis dans l'une quelconque des revendications 1 à 4 et
G₁' et G₂', qui sont identiques ou différents, représentent chacun indépendamment un groupe de formule (VIII) : 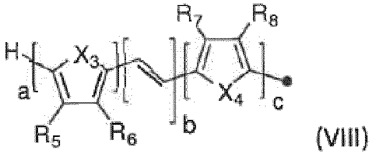 où 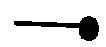 , X₃, X₄, R₅, R₆, R₇ et R₈ sont tels que définis dans l'une quelconque des revendications 1 et 5 à 7,
b') électropolymériser lesdits monomères, moyennant quoi le polymère redox de formule (I) est formé.
